Europäisches Patentamt

European Patent Office

Office européen des brevets

(11) Veröffentlichungsnummer: **0 423 704 B1**

(12) **EUROPÄISCHE PATENTSCHRIFT**

(45) Veröffentlichungstag der Patentschrift: **04.01.95**

(51) Int. Cl.[6]: **F16H 61/46**, F03C 1/06

(21) Anmeldenummer: **90119788.9**

(22) Anmeldetag: **16.10.90**

(54) **Einrichtung für druckgeregelte Verstellmotoren mit drehzahlabhängiger Einstelldruckkompensation.**

(30) Priorität: **20.10.89 DE 3935068**

(43) Veröffentlichungstag der Anmeldung:
**24.04.91 Patentblatt 91/17**

(45) Bekanntmachung des Hinweises auf die Patenterteilung:
**04.01.95 Patentblatt 95/01**

(84) Benannte Vertragsstaaten:
**DE FR IT SE**

(56) Entgegenhaltungen:
**GB-A- 1 222 405**
**GB-A- 1 312 933**

**PATENT ABSTRACTS OF JAPAN vol. 11, no. 111 (M-578)(2558) 08 April 1987,& JP-A-61 256 059**

**PATENT ABSTRACTS OF JAPAN vol. 10, no. 155 (M-485)(2211) 04 Juni 1986,& JP-A-61 10161**

(73) Patentinhaber: **SAUER-SUNDSTRAND GMBH & CO.**
**Postfach 24 60,**
**Krokamp 35**
**D-24531 Neumünster (DE)**

(72) Erfinder: **Widemann, Axel, Dipl.-Ing.**
**Am Kamp 41**
**W-2350 Neumünster (DE)**

(74) Vertreter: **Altenburg, Udo, Dipl.-Phys. et al**
**Patent- und Rechtsanwälte**
**Bardehle . Pagenberg . Dost . Altenburg . Frohwitter . Geissler & Partner**
**Galileiplatz 1**
**D-81679 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft einen Hydromotor mit veränderlichem Schluckvolumen gemäß dem Oberbegriff des Anspruches 1 sowie ein hydrostatisches Getriebe, das einen solchen Verstellmotor enthält.

Die Erfindung kommt vorzugsweise bei Radladern, Gabelstaplern und ähnlichen Arbeitsfahrzeugen zur Anwendung. Solche Arbeitsfahrzeuge besitzen neben einer Arbeitshydraulik häufig ein hydrostatisches Getriebe, auch hydraulischer Fahrantrieb oder hydraulisches Antriebssystem genannt. Die Leistung für das Bewegen des Fahrzeuges mit Hilfe des hydrostatischen Getriebes wird von einem üblichen Fahrzeugmotor, beispielsweise einem Dieselmotor, aufgebracht.

Ein hydrostatisches Getriebe ist die Kombination einer Pumpe und eines Hydraulikmotors, wie sie beispielsweise aus dem Service-Handbuch "Hydrostatisches Antriebssystem", Baureihe 20 + 50, 1987, S. 1-16 der Anmelderin bekannt ist. Die Arbeitsleistung des Dieselmotors wird von der Pumpe über einen hydraulischen Kreis auf den Hydromotor übertragen. Einer der beiden Anschlüsse am Hydromotor wird mit Hochdruck beaufschlagt, auch Arbeitsdruck oder Betriebsdruck genannt. Unter dem Begriff Hochdruck versteht man also im vorliegenden Zusammenhang den hydraulischen Systemdruck zwischen der Pumpe und dem Hydromotor. Am anderen Anschluß des Hydromotors steht das Hydrauliköl unter einem wesentlich niedrigeren Druck, dem sogenannten Fülldruck oder Speisedruck, der innerhalb der Pumpe gesondert erzeugt wird.

Bei der Pumpe handelt es sich um eine Verstellpumpe, also eine Hydraulikpumpe mit veränderlichem Fördervolumen. Die Verstellpumpe wird mit Hilfe eines Steuerblocks verstellt, wie er beispielsweise aus dem Service-Handbuch "Sauer-Fahrautomatik FBA, Standardausführung für Axialkolben-Verstellpumpen" bekannt ist. Durch den Einsatz eines solchen Getriebes mit Fahrautomatik wird ein autokonformes oder automotives Fahren des Arbeitsfahrzeugs erreicht. Autokonformes Fahren heißt, daß die gewünschte Fahrgeschwindigkeit durch die Fahrpedalbetätigung des Dieselmotors vorgegeben wird. Die Fahrgeschwindigkeit stellt sich proportional zur Fahrpedalverstellung ein, solange der Hochdruck 80 bar nicht übersteigt. Bei weiter steigendem Hochdruck (Drückung des Antriebsmotors, beispielsweise des Dieselmotors) wird der feste Zusammenhang zwischen Fahrpedalstellung und Fahrgeschwindigkeit aufgelöst. Abhängig von der zur Verfügung stehenden Antriebsleistung des Dieselmotors und dem Fahrwiderstand wird die Fahrgeschwindigkeit so beeinflußt, daß der Antriebsmotor nicht unzulässig gedrückt und damit überlastet wird. Infolge der internen Rückstellkräfte wird der Förderstrom im Arbeitskreis bei steigendem Betriebsdruck verringert.

Der Förderstrom der Pumpe wird im wesentlichen durch die Druckdifferenz zwischen einem Steuerdruck und dem bereits erwähnten Fülldruck bestimmt, der gewissermaßen als Bezugsdruck herangezogen wird. Diese Druckdifferenz bewirkt über einen oder mehrere Verstellzylinder die Verstellung einer Schwenkscheibe in der Pumpe. Die Differenz zwischen Steuerdruck und Speisedruck hängt von der Drehzahl der Welle ab, die den Dieselmotor mit der Verstellpumpe verbindet. Die Druckdifferenz beträgt etwa 2 bar für das Anfahren und etwa 15 bar für den maximalen Förderstrom der Pumpe, der bei einer mittleren Drehzahl erreicht wird. Ein richtig eingestellter Antrieb setzt das Fahrzeug bei einer Dieseldrehzahl von 1000 bis 1200 Umdrehungen pro Minute in Bewegung. Die Pumpe wird dann durch den wachsenden Steuerdruck zum maximalen Fördervolumen verstellt, wobei dieses bei noch relativ geringer Drehzahl passiert sein muß (1500 bis 1700 Umdrehungen pro Minute).

Der von der Pumpe erzeugte Förderstrom wird über den Hochdruckanschluß in den Hydromotor gedrückt und im geschlossenen Kreislauf zur Pumpe zurückgeführt. Als Hydromotor wird im allgemeinen kein Konstantmotor, sondern ein Verstellmotor verwendet, also ein Hydraulikmotor mit veränderlichem Schluckvolumen. Ein derartiger Verstellmotor ist beispielsweise aus der Firmendruckschrift Technische Information, "Axialkolben-Verstellmotoren", Baureihe 50, 5/88, S. 1-16 der Anmelderin bekannt. Unter dem Schluckvolumen ist diejenige Menge Öl in $cm^3$ zu verstehen, die der Verstellmotor bei einer Umdrehung seiner Welle aufnimmt. Die Verstellung des Schluckvolumens zwischen einem Minimalwert und einem Maximalwert geschieht mit Hilfe eines in einem Stellzylinder beweglichen Stellkolbens, der den Winkel zwischen dem Arbeitskolben und der Welle zwischen einer Minimalposition und einer Maximalposition verschwenkt. Der minimale Schwenkwinkel kann beispielsweise 8° betragen, während der maximale Schwenkwinkel 40° beträgt. Als Verstellbereich läßt sich beispielsweise der Faktor 4,6 zwischen dem maximalen und dem minimalen Schluckvolumen erreichen. Die Verstellung kann unter Last und mit kurzen Verstellzeiten vorgenommen werden.

Der Verstellmotor kann mit Regel- und Verstelleinrichtungen vielfältiger Art ausgestattet sein. Als Basisverstellung, auf der die Erfindung aufbaut, wird ein Verstellprinzip mit der Abkürzung VMA herangezogen, während eine ebenfalls bekannte Regelung mit der Abkürzung RDM einem Leistungsvergleich dient. Mit RDM wird ein Konstantdruckregler bezeichnet, bei dem das Schluckvolumen durch eine hydraulische Proportionalverstellung stufenlos einstellbar ist. Der Arbeitsdruck am Verstellmotor, also der Hochdruck, liefert nicht nur den Stelldruck intern an den Stellzylinder, sondern bestimmt auch das Ausmaß der Velstellung. Der Regler wird werkseitig auf einen Regelbeginn und ein minimales Schluckvolumen eingestellt. Ab Regelbeginn, also sobald der Hochdruck den eingestellten Regeldruck erreicht, sorgt der Regelkreis dafür, daß der eingestellte Druck konstant am Motor anliegt.

Im Unterschied dazu wird unter VMA eine steuerdruck- und hochdruckabhängige Zweipunktverstellung des Schluckvolumens bei variablem Hochdruck verstanden. Der Regelbeginn ist derselbe wie bei der RDM-Regelung, d. h. der Regeldruck bewegt sich in der Praxis zwischen 170 und 250 bar je nach Anwendungsfall. Im Unterschied zu dem rein druckgeregelten Motor (RDM) wird bei VMA jedoch die Verstellung des Schluckvolumens zu kleineren Werten hin von einem externen Steuerdruck ausgelöst, und zwar von demjenigen Steuerdruck der von der Verstellpumpe mit Fahrautomatik bereitgestellt wird. Dieser Steuerdruck wird von einer Füll- und Steuerpumpe erzeugt, die zusammen mit der Verstellpumpe auf der Antriebswelle des Dieselmotors sitzt. Die VMA-Verstellung bietet Vorteile beim Fahrkomfort und erlaubt feinfühliges Fahren sowie leichtes Rangieren. Die Hauptfaktoren, die hierzu beitragen, sind das Anfahren, das grundsätzlich auf großem Winkel des Hydraulikmotors geschieht, und die Umschaltung, die bei einer gewissen Drehzahl erfolgt.

Die Erfindung geht also von einem Verstellmotor in einem hydrostatischen Getriebe aus, bei dem der Steuerdruck welcher in der Fahrautomatik der Verstellpumpe erzeugt wird und ein Maß für die Drehzahl n darstellt, auch zur Beeinflussung des Hochdrucks im Verstellmotor herangezogen wird.

Die Erfindung hat sich die Aufgabe gestellt, durch eine gezielte Anpassung des Systemdrucks am Verstellmotor die zur Verfügung stehende hydraulische Leistung im mittleren Drehzahlbereich voll auszunutzen und in Fahrleistung umzusetzen.

Diese Aufgabe wird erfindungsgemäß bei einem Hydromotor gemäß dem Oberbegriff des Anspruches 1 durch die Merkmale gemäß dem kennzeichnenden Teil des Anspruches 1 gelöst. Zweckmäßige Weiterbildungen sind in den Unteransprüchen angegeben.

Die Erfindung beruht auf der Erkenntnis, daß bei bestehenden Systemen der Regeldruck im mittleren Drehzahlbereich zu niedrig ist. Das führt dazu, daß der Dieselmotor im Mittelbereich nicht ausgenutzt wird und der Antrieb unwirtschaftlich läuft. Die bestehenden Systeme fahren entweder mit einem konstant eingestellten Regeldruck unabhängig von der Drehzahl (RDM) oder mit einem Regeldruck, der zwar veränderlich, aber bei mittleren Drehzahlen kleiner ist als der fest eingestellte Regeldruck (VMA). Die Erfindung lehrt demgegenüber eine umgekehrte Anpassung, d.h. der Regeldruck soll bei mittleren Drehzahlen höher sein als bei der maximalen Drehzahl. Die erfindungsgemäße Zusatzeinrichtung begrenzt die Drückung des Antriebsmotors nicht bei zu geringen Werten, sondern bei den drehzahlabhängig möglichen Werten.

Ein besonderer Vorteil der Erfindung liegt darin, daß der Umschaltpunkt völlig unabhängig vom Regeldruck eingestellt werden kann. Dadurch kann der Umschaltpunkt von großem auf kleines Schluckvolumen wesentlich besser an die Gegebenheiten des Fahrzeugs angepaßt werden.

Nachfolgend wird die Erfindung anhand eines Ausführungsbeispiels erläutert. Es zeigt:

Fig. 1 einen schematischen Schaltplan eines hydrostatischen Getriebes, bei dem eine drehzahlabhängige Umschaltung des Verstellmotors durch die erfindungsgemäße Zusatzeinrichtung vorgesehen ist;

Fig. 2 Kennlinienfelder der Leistung P als Funktion der Drehzahl n für einen Dieselmotor sowie für ein daran angeschlossenes hydrostatisches Getriebe, wobei das erfindungsgemäße Verstellprinzip des Getriebes zwei bekannten Verstellprinzipien gegenübergestellt ist.

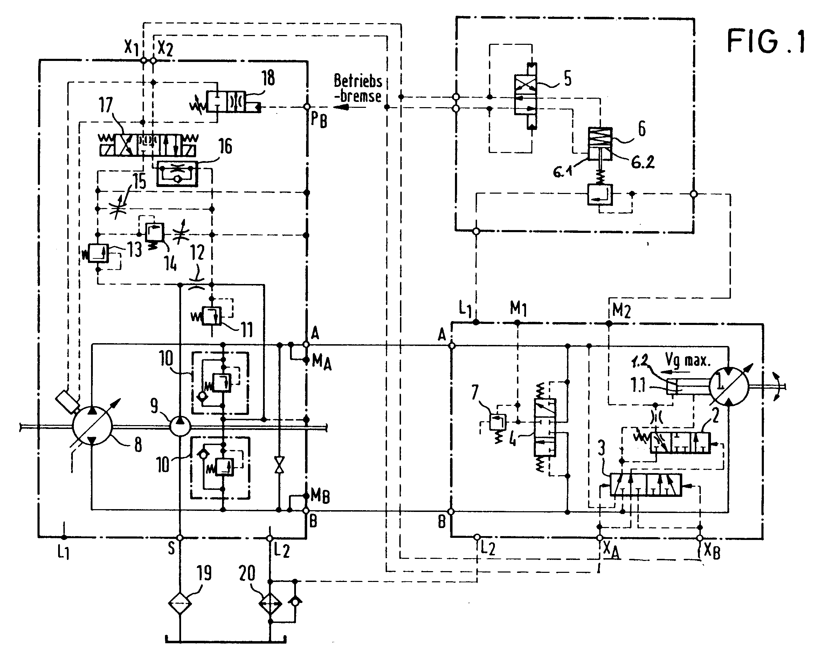

In Fig. 1 ist mit dem Bezugszeichen 1 ein handelsüblicher Verstellmotor bezeichnet. Im bevorzugten Ausführungsbeispiel handelt es sich um einen Axialkolbenmotor mit schräg gestellter Achse. Die Winkelposition des Arbeitskolbens ist schwenkbar mit Hilfe eines Stellzylinders 1.1, in welchem ein Stellkolben 1.2 gleitet. Die Ansteuerung des Stellzylinders 1.1 durch den Hochdruck an der Kolbenstangenseite (rechts) hält den Verstellmotor 1 zunächst auf dem maximal möglichen Schluckvolumen. Das Verstellbeginnventil 2 hat die Aufgabe, ab einem bestimmten Steuerdruck (gleichbedeutend mit einer bestimmten Drehzahl des Dieselmotors, z.B. 1600 Umdrehungen pro Minute) den Hochdruck auch auf die Kolbenseite des Stellzylinders 1.1 zu leiten. Die Druckfläche auf der Kolbenseite (links) ist doppelt so groß wie diejenige auf der Kolbenstangenseite (rechts) und somit wird der Motor bei einem bestimmten Steuerdruck, sprich einer bestimmten Drehzahl, auf das kleinere Schluckvolumen geschwenkt. Dadurch fährt das Fahrzeug schneller. Die Umschaltung des Hydraulikmotors 1 auf den kleinen Schwenkwinkel erfolgt schlagartig. Ein zusätzliches Druckventil läßt den Verstellmotor 1 nur soweit ausschwenken, daß ein vorgegebener Regeldruck p nicht überschritten wird. Der eingestellte Regeldruck p wird aus dem maximalen Leistungsdruck des Dieselmotors (z.B.

2500 Umdrehungen pro Minute) abgeleitet und ergibt sich aus der Formel, die allgemein die Leistung in Hydraulikmotoren und Hydraulikpumpen beschreibt, zu:

$$\text{Druck } p = \frac{P \times 600}{n \times V}$$

Dabei ist P die Leistung in Watt, n die Drehzahl in Umdrehungen pro Minute und V das Schluckvolumen in cm$^3$ pro Umdrehung. Im Endeffekt wird erreicht, daß während eines Beschleunigungsvorganges nach dem Schaltpunkt des Hydraulikmotors der Hochdruck nicht über einen bestimmten Regeldruck ansteigen kann.

Bei Fahrtrichtung "vorwärts" liegt der Hochdruck an der Arbeitsleitung A an, während an der Arbeitsleitung B nur der Füll- oder Speisedruck wirksam ist. Bei Fahrtrichtung "rückwärts" werden die Drücke an den Arbeitsleitungen A und B vertauscht. Für den Steuerdruck gilt Entsprechendes: Bei Vorwärtsfahrt liegt der Steuerdruck am Steueranschluß $X_A$ an, bei Rückwärtsfahrt am Steueranschluß $X_B$. Die jeweils andere Leitung führt nur den niedrigeren Fülldruck. Das Druckzuordnungsventil 3 sorgt nun dafür, daß der Hochdruck und der Steuerdruck unabhängig von der Fahrtrichtung richtig auf das Verstellbeginnventil 2 geleitet wird. Beispielsweise werden bei Vorwärtsfahrt die höheren Drücke bei A und bei $X_A$ weitergeleitet.

Der Spülschieber 4 und das Spüldruckventil 7 sind zur Erläuterung der Erfindung nicht wesentlich.

Der Steuerdruck wird im Fahrautomatikregler der Verstellpumpe 8 erzeugt. In dem Fahrtrichtungsventil 17 wird der Start und die Fahrtrichtung des Fahrzeugs vorgewählt. In der Nullstellung des Fahrtrichtungsventils 17 ist in beiden Steuerleitungen $X_1$ und $X_2$ der niedrige Fülldruck wirksam. Wird das Fahrtrichtungsventil 17 in die linke oder rechte Schaltstellung geschaltet, so wirkt in der einen Steuerleitung der antriebsdrehzahlabhängige Steuerdruck und in der anderen der Fülldruck. Der Förderstrom der Pumpe wird im wesentlichen durch die auf den Verstellzylinder wirkende Druckdifferenz (Steuerdruck abzüglich Fülldruck) bestimmt. Hierbei beträgt die erforderliche Druckdifferenz für das Anfahren ca. 2 bar, für den maximalen Förderstrom ca. 20 bis 15 bar.

Bei der Leerlaufdrehzahl des Dieselmotors strömt der gesamte Förderstrom der Füll- und Steuerpumpe 9 über die feste Steuerblende 12 und nach dem Ansprechen des Anfahrdruckventils 13 über die Anfahrblende 15 in den Füllkreis. Proportional zur Drehzahlerhöhung steigt der Staudruck vor diesen Drosseln. Bei geschaltetem Fahrtrichtungsventil 17 wirkt somit die Differenz zwischen Steuerdruck und Speisedruck auf den Verstellzylinder der Verstellpumpe 8. Mit der Fahrdrossel oder Anfahrblende 15 wird der Steuerdruck für das Anfahren des Fahrzeugs bei entsprechender Dieselmotordrehzahl (Anfahrdrehzahl) eingestellt. Parallel zur Anfahrblende 15 wirkt nach Erreichen des Öffnungsdruckes das Drückungsventil 14. Dieses Ventil dient zur Einstellung der Antriebsdrehzahl, bei der die Pumpe ihre maximale Ausschwenkung erreicht. Die Beschleunigungsblende 16 begrenzt die Ausschwenkgeschwindigkeit der Pumpe und somit die Anfahrbeschleunigung des Fahrzeugs. Der drehzahlabhängigen Pumpenverstellung ist eine mechanische Inchung überlagert. Bei Betätigung des Inchpedals (vergleichbar mit dem Kupplungspedal im Kraftfahrzeug) wird das Inchventil 10 geöffnet und wegabhängig der Steuerdruck so weit abgebaut, daß auch bei maximaler Antriebsdrehzahl die Pumpe auf die Fördermenge Null zurückschwenkt. Das Inchpedal kann als Betriebsbremse dienen oder Leistung für die Arbeitshydraulik freimachen.

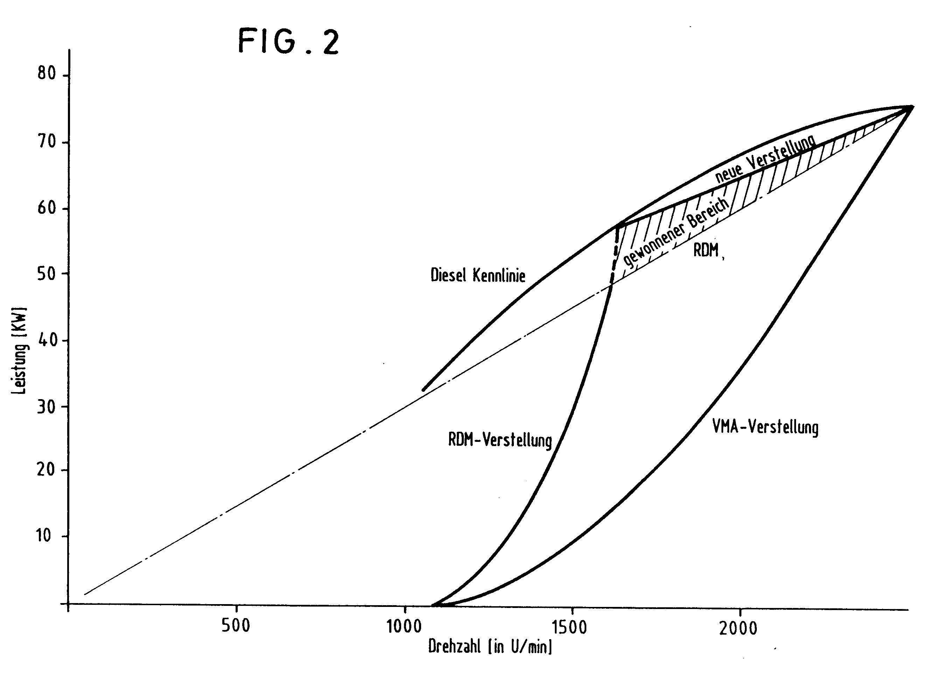

Ein richtig eingestellter Antrieb setzt das Fahrzeug bei einer Dieseldrehzahl von 1000 bis 1200 Umdrehungen pro Minute in Bewegung (vgl. auch das Kennlinienfeld in Fig. 2). Dabei steht der Hydraulikmotor 1 auf großem Schluckvolumen. Die Pumpe wird dann in einer ersten Phase über den Steuerdruck zum maximalen Fördervolumen verstellt, welches bei noch relativ geringer Drehzahl (1500 bis 1700 umdrehungen pro Minute) erreicht wird. Danach erhält der Hydraulikmotor 1 das Signal, in einer zweiten Phase zu kleinem Schluckvolumen zu verstellen (Verstellbeginnventil 2). Der Verstellbeginn des Hydraulikmotors 1 ist einstellbar, um ihn an die Pumpencharakteristik und das Fahrzeug anpassen zu können.

Das bisher erläuterte Getriebeschema ist bekannt und wird auch in gewissem Umfang in der Praxis eingesetzt. Beim Fahren eines solchen Antriebs wird beim Fahrer der Wunsch geweckt, mit relativ geringer Drehzahl möglichst schnell zu fahren. Dieser Wunsch resultiert aus der ständigen Belastung durch den Motorenlärm einerseits und der Zielvorgabe, schnell zu arbeiten, andererseits. Nachfolgend wird das erfindungsgemäße Verfahren zur Optimierung des Beschleunigungsvorgangs und zur Verbesserung der Fahreigenschaften im Teillastbereich beschrieben.

Hierzu dient die Zusatzeinrichtung mit den Bezugszeichen 5 und 6, die in Fig. 1 rechts oben dargestellt ist. Das Steuerdruckzuordnungsventil 5 hat die Aufgabe, einen Druckvergleich zwischen den Steuerleitungen $X_A$ und $X_B$ vorzunehmen und auf das Ventil 6 weiterzuleiten. Die Drücke werden immer so geleitet, daß der höhere Druck, also der Steuerdruck, an der Kolbenstangenseite des Ventils 6 liegt. Das Kernstück der erfindungsgemäßen Motorverstellung ist das steuerdruckgeführte Druckregelventil 6. Es hat die Aufgabe, in Abhängigkeit von der Druckdifferenz zwischen Steuerdruck und Speisedruck, welche ja drehzahlabhängig ist, den Regeldruck $^P$an der Kolbenseite des Verstellmotors 1 zu limitieren. Hierzu ist das Druckregelventil 6 einerseits über den Anschluß $M_2$ mit dem Regeldruck des Verstellmotors verbunden, andererseits über einen Leckanschluß, z.B. $L_1$, mit dem Gehäuse des Verstellmotors 1. Bei einer bestimmten Druckdifferenz zwischen $X_A$ und $X_B$ nimmt der Verstellmotor 1 eine bestimmte Position des Schwenkwinkels ein.

Die Funktion der erfindungsgemäßen Zusatzeinrichtung 5, 6 wird anhand des Kennlinienfeldes in Fig. 2 näher erläutert. Die Dieselkennlinie gibt die Basis für die zur Verfügung stehende Leistung an. Ferner ist in diesem Kennlinienfeld die Leistungsaufnahme einer Pumpen-Motor-Kombination mit der bekannten steuerdruckabhängigen Verstellung (VMA) sowie die Leistungsaufnahme einer Pumpen-Motor-Kombination mit einer reinen Druckregelung des Motors nach dem Stand der Technik (RDM) zu erkennen. Die entscheidende Neuerung ist, daß durch das zusätzliche Druckregelventil 6 der Regeldruck für den Verstellmotor 1 drehzahlabhängig geführt wird. Dabei ist wesentlich, daß bei sinkender Drehzahl (also bei sinkendem Steuerdruck) der Regeldruck für den Motor steigt, um somit auch im Teillastbereich die gesamte Dieselleistung ausnutzen zu können. Die Erfindung hat erkannt, daß bei voll ausgeschwenkter Pumpe der Regeldruck im mittleren Drehzahlbereich höher sein muß als am maximalen Leistungspunkt des Dieselmotors. Diese wesentliche Änderung der bisherigen Antriebskonzepte führt zu einer deutlichen Beschleunigungsverbesserung und einer erheblich besseren Ausnutzung des Dieselmotors im Teillastbereich. Wird ein Fahrzeug beschleunigt, welches mit dem erfindungsgemäßen Antrieb ausgerüstet ist, so wird der Hydraulikmotor 1 bei einer Drehzahl von beispielsweise 1500 Umdrehungen pro Minute über das Verstellbeginnventil 2 das Signal bekommen, den großen Schwenkwinkel zu verlassen und auf das kleine Schluckvolumen zu schwenken. Durch die Geschwindigkeitszunahme und die Schluckvolumenänderung des Verstellmotors ist ein Druckanstieg im Hochdruckkreis zu verzeichnen. Dieser Hochdruck wird durch das Druckregelventil 6 in der Weise limitiert, das das Fahrzeug mit einem Druck beschleunigt, der dem möglichen Hochdruck im System entspricht, welchen der Dieselmotor bei maximal ausgeschwenkter Pumpe erbringen kann. Da sich dieser mögliche Hochdruck in Abhängigkeit von der Drehzahl ändert, wird der Hochdruck am Verstellmotor 1 der Drehzahl des Dieselmotors angepaßt. Durch die Anpassung des Systemdrucks an die zur Verfügung stehende Dieselleistung laufen die Hydraulikkomponenten immer im besten Bereich des Wirkungsgrads. Der Dieselmotor wird nicht nur, wie bisher, bei der maximalen Drehzahl voll ausgenutzt, sondern im gesamten oberen Drehzahlbereich zwischen 1500 und 2500 Umdrehungen pro Minute. Die erreichbare Maximalgeschwindigkeit des Fahrzeugs ist nach wie vor gewährleistet. Der erfindungsgemäß gewonnene Bereich ist im Kennlinienfeld Fig. 2 markiert.

Liste der Bezugszeichen

| | |
|---|---|
| 1 | Verstellmotor / Hydromotor |
| 1.1 | Stellzylinder |
| 1.2 | Stellkolben |
| 2 | Verstellbeginnventil |
| 3 | Druckzuordnungsventil |
| 4 | Spülschieber |
| 5 | Steuerdruckzuordnungsventil |
| 6 | Steuerdruckgeführtes Druckregelventil |
| 6.1 | Stellzylinder |
| 6.2 | Stellkolben |
| 7 | Spüldruckventil |
| 8 | Verstellpumpe |
| 9 | Füll- und Steuerpumpe |
| 10 | Hochdruckbegrenzungsventil |
| 11 | Fülldruckventil |
| 12 | Steuerdruck-Festblende |
| 13 | Anfahrdruckventil |
| 14 | Drückungsventil |
| 15 | Anfahrblende |
| 16 | Beschleunigungsblende |
| 17 | Fahrtrichtungsventil |
| 18 | Inchventil (hydrostatische Betriebsbremse) |
| 19 | Filter |
| 20 | Kühler |

**Patentansprüche**

1. Hydromotor mit veränderlichem Schluckvolumen (Verstellmotor 1), also mit Anschlüssen für Hochdruck und Steuerdruck,

   - bei dem ein Verstellbeginnventil (2) in Abhängigkeit von dem Steuerdruck (am Anschluß $X_A$ oder $X_B$) das Schluckvolumen (V) so verstellt, daß bei steigendem Steuerdruck von einem bestimmten Umschaltpunkt ab das Schluckvolumen (V) unter seinen geometrisch festgelegten Maximalwert verringert wird,

   - und bei dem das verstellte Schluckvolumen (V) zusätzlich durch eine Regelung des Hochdrucks so beeinflußt wird, daß ein vorgegebener Regeldruck (p am Anschluß $M_2$) nicht überschritten wird,

   **dadurch gekennzeichnet**, daß

- die der Verstellung überlagerte Hochdruckregelung durch ein Druckregelventil (6) erfolgt, welches den vorgegebenen Regeldruck (p) am Ausgang des Verstellbeginnventils (2) steuerdruckabhängig so hoch führt, daß der Verstellmotor (1) die von dem Steuerdruck signalisierte, ihm zur Verfügung stehende hydraulische Leistung (P) aufnimmt.

2. Hydromotor nach Anspruch 1, dadurch gekennzeichnet, daß der Regeldruck (p) im mittleren Leistungsbereich höher als bei maximaler Leistung ist und daß das steuerdruckgeführte Druckregelventil (6) bei sinkendem Steuerdruck den Regeldruck (p) anhebt.

3. Hydromotor nach einem der vorhergehenden Ansprüche, dadurch gekennzeichnet, daß die steuerdruckabhängige Verstellung des Schluckvolumens (V) eine Zweipunktverstellung von dem Maximalwert am Umschaltpunkt zu einem Minimalwert ist.

4. Hydromotor nach einem der vorhergehenden Ansprüche, dadurch gekennzeichnet, daß der Verstellmotor (1) als Axialkolbenmotor mit schräg gestellter Achse ausgeführt ist.

5. Hydromotor nach einem der vorhergehenden Ansprüche, dadurch gekennzeichnet, daß die Verstellung des Schluckvolumens hydraulisch mit Hilfe eines Stellzylinders (1.1) und eines Stellkolbens (1.2) geschieht, die den Verstellmotor (1) bis zu einem bestimmten Schwenkwinkel ausschwenken.

6. Hydromotor nach einem der vorhergehenden Ansprüche, dadurch gekennzeichnet, daß er in einem geschlossenen Hochdruckkreislauf an eine Verstellpumpe (8) angeschlossen ist, um ein hydrostatisches Getriebe zu konstituieren.

7. Hydrostatisches Getriebe nach Anspruch 6, dadurch gekennzeichnet, daß die Verstellpumpe (8) als Axialkolbenpumpe ausgeführt ist.

8. Hydrostatisches Getriebe nach Anspruch 6 oder 7, dadurch gekennzeichnet, daß die Verstellpumpe (8) durch eine Fahrautomatik (11 bis 18) gesteuert wird, welche die Leistung des an die Pumpenwelle angeschlossenen Antriebsaggregats in eine autokonforme Fahrbewegung umsetzt.

9. Hydrostatisches Getriebe nach einem der Ansprüche 6, 7 oder 8, dadurch gekennzeichnet, daß eine Füll- und Steuerpumpe (9) auf der Antriebsachse der Verstellpumpe (8) sitzt und den Steuerdruck für die Fahrautomatik (11 bis 18) drehzahlabhängig erzeugt.

10. Hydrostatisches Getriebe nach Anspruch 8 oder 9, dadurch gekennzeichnet, daß ein in der Fahrautomatik untergebrachtes Fahrtrichtungsventil (17) den drehzahlabhängigen Steuerdruck je nach Fahrtrichtung auf eine von zwei Leitungen ($X_1$ oder $X_2$) legt.

11. Hydrostatisches Getriebe nach einem der Ansprüche 6 bis 10, dadurch gekennzeichnet, daß der auf die Verstellpumpe (8) wirkende Steuerdruck zur Steuerung des Verstellmotors (1) herangezogen wird.

12. Hydrostatisches Getriebe nach Anspruch 11, dadurch gekennzeichnet, daß der Umschaltpunkt für den Verstellmotor (1) am Verstellbeginnventil (2) drehzahlabhängig einstellbar ist.

13. Hydrostatisches Getriebe nach einem der Ansprüche 11 oder 12, dadurch gekennzeichnet, daß das Druckregelventil (6) durch den Steuerdruck der Fahrautomatik drehzahlabhängig gesteuert wird.

14. Hydrostatisches Getriebe nach einem der Ansprüche 11 bis 13, dadurch gekennzeichnet, daß ein Druckzuordnungsventil (3) abhängig von der Fahrtrichtung (vorwärts = A, rückwärts = B) den jeweils höheren Druck dem Verstellbeginnventil (2) zuführt, und zwar sowohl den Steuerdruck ($X_A$ oder $X_B$) als auch den Hochdruck (A oder B).

15. Hydrostatisches Getriebe nach einem der Ansprüche 11 bis 14, dadurch gekennzeichnet, daß ein Steuerdruckzuordnungsventil (5) den jeweils höheren Druck als Steuerdruck der Kolbenseite des Stellzylinders (6.1) des Druckregelventils (6) zuführt.

**Claims**

1. Hydromotor with variable absorption volume (variable displacement motor 1), that is, having connections for high pressure and actuating pressure,
    - in which an initial displacement valve (2) depending on the actuating pressure (at connection $X_A$ or $X_B$) adjusts the absorption volume (V) in such a way that, under increasing actuating pressure beginning at a certain switch point, the absorption volume (V) is decreased below it geometrically-determined maximum value,

-   and in which the adjusted absorption volume (V) is additionally influenced by regulating the high pressure in such a way that a given regulation pressure (p at connection $M_2$) is not exceeded,

**characterized in that**

-   the high pressure regulation superimposed on the adjustment is effected by a pressure regulator (6) which drives the given regulation pressure (p) at the output of the initial displacement valve (2), depending on the actuating pressure, so high that the variable displacement motor (1) takes up the hydraulic power (P) available to it and signalled by the actuating pressure.

2.  Hydromotor according to claim 1, characterized in that the regulating pressure (p) in the average power range is higher than at maximum power and in that the pressure regulator (6) driven by the actuating pressure, increases the regulating pressure (p) at a decreasing actuating pressure.

3.  Hydromotor according to one of the preceding claims, characterized in that the adjustment of the absorption volume (V), dependent on the actuating pressure, is a two-point adjustment from the maximum value at the switch point to a minimum value.

4.  Hydromotor according to one of the preceding claims, characterized in that the variable displacement motor (1) is an axial piston motor having a diagonally situated axis.

5.  Hydromotor according to one of the preceding claims, characterized in that adjustment of the absorption volume occurs hydraulically by means of a control cylinder (1.1) and a control piston (1.2) which rotate the variable displacement motor (1) up to a certain rotation angle.

6.  Hydromotor according to one of the preceding claims, characterized in that in a closed high pressure circuit it is connected to a variable displacement pump (8) in order to establish a hydrostatic mechanism.

7.  Hydrostatic mechanism according to claim 6, characterized in that the variable displacement pump (8) is an axial piston pump.

8.  Hydrostatic mechanism according to claim 6 or 7, characterized in that the variable displacement pump (8) is controlled by a drive automation system (11 to 18) which transforms the power of the drive assembly connected to the pump shaft into an auto-conforming travelling motion.

9.  Hydrostatic mechanism according to any of the claims 6, 7 or 8, characterized in that a filling and control pump (9) sits on the driving axle of the variable displacement pump (8) and produces the actuating pressure for the drive automation system (11 to 18), depending on the rpms.

10. Hydrostatic mechanism according claim 8 or 9, characterized in that a driving direction valve (17) placed in the drive automation system places the actuating pressure, which is dependent on the rpms, in one of two lines ($X_1$ or $X_2$), depending on the driving direction.

11. Hydrostatic mechanism according to any of the claims 6 to 10, characterized in that the actuating pressure acting on the variable displacement pump (8) is taken for controlling the variable displacement motor (1).

12. Hydrostatic mechanism according to claim 11, characterized in that the switch point for the variable displacement motor (1) at the initial displacement valve (2) is adjustable depending on the rpms.

13. Hydrostatic mechanism according to claim 11 or 12, characterized in that the pressure regulator (6) is controlled by the actuating pressure of the drive automation system, depending on the rpms.

14. Hydrostatic mechanism according to any of the claims 11 to 13, characterized in that a pressure allocation valve (3), depending on the driving direction (forwards = A, backwards = B), carries the respective higher pressure to the initial displacement valve (2), the actuating pressure ($X_A$, $X_B$) as well as the high pressure (A or B).

15. Hydrostatic mechanism according to any of the claims 11 to 14, characterized in that an actuating pressure allocation valve (5) carries the respective higher pressure as actuating pressure to the piston side of the control cylinder (6.1) of the pressure regulator (6).

**Revendications**

1.  Un moteur hydraulique avec un volume d'admission variable (moteur à cylindrée variable), c. a. d. avec des raccords pour haute pression et pression de commande,

- dans lequel une soupape de début de réglage (2) règle le volume d'admission (V) en fonction de la pression de commande (au raccord $X_A$ ou $X_B$) d'une façon telle que le volume d'admission (V) est diminué au dessous de sa valeur maximale fixée géométriquement pour une pression de commande croissante à partir d'un certain point de changement.
- et dans lequel on influence additionnellement le volume d'admission réglé (V) par un réglage de la haute pression d'une façon telle qu'une pression de réglage (p au raccord $M_2$) n'est pas dépassée,

caractérisé en ce que

- le réglage de la haute pression superposée au réglage se fait par une soupape de réglage de pression (6) qui amène la pression de réglage (p) en sortie de la soupape de début de réglage (2), en fonction de la pression de commande, si haut que le moteur à cylindrée variable (1) reçoit la puissance hydraulique (P), qui est à sa disposition et qui est signalée par la pression de commande.

2. Un moteur hydraulique selon la revendication 1, caractérisé en ce que la pression de réglage (p) est plus haute dans le domaine de puissance moyenne qu'à la puissance maximale et que la soupape de réglage de pression (6) commandée par la pression de commande augmente la pression de réglage (p) pour une pression de commande décroissante.

3. Un moteur hydraulique selon l'une des revendications précédentes, caractérisé en ce que le réglage du volume d'admission (V) en fonction de la pression de commande est une régulation à deux points de la valeur maximale au point de changement à une valeur minimale.

4. Un moteur hydraulique selon l'une des revendication précédentes, caractérisé en ce que le moteur à cylindrée variable (1) est réalisé sous forme d'un moteur à piston axial avec un axe incliné.

5. Un moteur hydraulique selon l'une des revendications précédentes, caractérisé en ce que le réglage du volume d'admission se fait de façon hydraulique à l'aide d'un cylindre de réglage (1.1) et d'un piston de réglage (1.2) faisant pivoter le moteur à cylindrée variable (1) jusqu'à un certain angle de pivotement.

6. Un moteur hydraulique selon l'une des revendications précédentes, caractérisé en ce qu'il est relié à une pompe de réglage (8) dans un circuit fermé de haute pression pour constituer une transmission hydrostatique.

7. Une transmission hydrostatique selon la revendication 6, caractérisée en ce que la pompe de réglage (8) est réalisée sous forme d'une pompe à piston axial.

8. Une transmission hydrostatique selon la revendication 6 ou 7, caractérisée en ce que la pompe de réglage (8) est commandée par un automate de commande (11 à 18) transformant la puissance du groupe moto-propulseur lié à l'arbre de la pompe en un mouvement de translation autoconforme.

9. Une transmission hydrostatique selon l'une des revendications 6, 7 ou 8, caractérisée en ce que la pompe de remplissage et de commande (9) est disposée sur un axe d'entraînement de la pompe de réglage (8) et en ce qu'elle produit la pression de commande pour l'automate de conduite (11 à 18) en fonction de la vitesse de rotation.

10. Une transmission hydrostatique selon la revendication 8 ou 9, caractérisée en ce qu'une soupape de direction de course (17) logée dans l'automate de conduite met la pression de commande selon la direction de course sur l'une des deux conduites ($X_1$ ou $X_2$) selon la direction de course.

11. Une transmission hydrostatique selon l'une des revendications 6 à 10, caractérisée en ce que la pression de commande agissant sur la pompe de réglage (8) est utilisée pour la commande du moteur à cylindrée variable (1).

12. Une transmission hydrostatique selon la revendication 11, caractérisée en ce que le point de changement pour le moteur à cylindrée variable (1) est réglable à la soupape de début de réglage (2) en fonction de la vitesse de rotation.

13. Une transmission hydrostatique selon l'une des revendications 11 ou 12, caractérisée en ce que la soupape de réglage de pression (6) est commandée en fonction de la vitesse de rotation par la pression de commande de l'automate de conduite.

14. Une transmission hydrostatique selon l'une des revendication 11 à 13, caractérisée en ce qu'une soupape d'attribution de pression (3) fournit, en fonction de la direction de course (en avant = A, en arrière = B), la pression respective plus grande à la soupape de début de réglage (2), qu'il s'agisse de la pression de commande ($X_A$ ou $X_B$) ou de la haute pression (A ou B).

15. Une transmission hydrostatique selon l'une des revendications 11 à 14, caractérisée en ce qu'une soupape d'attribution de la pression de commande (5) fournit la pression respective plus grande que la pression de commande du côté du piston du cylindre de réglage (6.1) de la soupape de réglage de pression (6).

FIG.1

Betriebs-bremse

EP 0 423 704 B1

# FIG.2

EP 0 423 704 B1